Europäisches Patentamt

European Patent Office

Office européen des brevets

(11) Publication number: **0 257 732**
A1

# EUROPEAN PATENT APPLICATION

(21) Application number: **87303871.5**

(22) Date of filing: **30.04.87**

(51) Int. Cl.⁴: **A 47 J 43/044**

(30) Priority: **07.08.86 AU 7318/86**

(43) Date of publication of application: **02.03.88 Bulletin 88/9**

(84) Designated Contracting States: **DE FR GB IT**

(71) Applicant: **BREVILLE R & D PTY. LIMITED, 45 Murray Street, Pyrmont New South Wales (AU)**

(72) Inventor: **McClean, John William, 5 Beverley Crescent, Lakemba New South Wales (AU)**

(74) Representative: **Mair, Richard Douglas et al, F.J. Cleveland & Company 40-43 Chancery Lane, London WC2A 1JQ (GB)**

(54) **Food processor.**

(57) A milk shake maker consisting of an elongated upright container (10) open at the upper end with the lower end having an internally concave bottom (18), there being formed in the sides of the container near the bottom and extending into the concavity a plurality of circumferentially spaced radially inwardly extending ribs (19). An electrically driven shaft (15) extends into the container to the bottom thereof the shaft having on it two sets of blades (16, 17), a first set (16) on a portion of the shaft above the bottom and a second set (17) near its lower end and within the concave bottom of the container, the blades of the second set (17) being shaped to fulfil the dual function of mixing ingredients placed in the container and also chopping and pulverizing of fruit placed into the container and held against rotation by means of the ribs (19).

**0257732**

FOOD PROCESSOR

The present invention relates to food processors and more particularly to food processors intended particularly for the making of milk shakes which will be referred to as milk shake makers.

Milk shake makers consist essentially of an electric motor driving a shaft at the lower end of which is a mixing blade. These are used in conjunction with an elongated container in which milk, ice cream and other ingredients are placed. The mixing blade is then inserted into the container and caused to rotate rapidly and thereby produce a homogenous and drinkable mixture of the ingredients.

In the making of milk shakes it is not unusual to incorporate fresh fruit such as bananas. However, in presently available milk shake makers it is necessary that the fruit should be reduced to a puree before insertion in the container. The object of the present invention is to provide a milk shake maker which renders this unnecessary and which is capable of chopping and pulverizing small pieces of fruit during the preparation of a milk shake.

The present invention consists in a milk shake maker comprising an elongated upright container open at the upper end, the lower end of the container being closed by an internally concave bottom, there being formed in the sides of the container near the bottom and extending into the concavity a plurality of circumferentially spaced, radially inwardly extending ribs, an electrically driven shaft extending into the container to the bottom thereof, the shaft having on it two sets of blades, a first set on a portion of the shaft above the bottom and a second set near its lower end and within the concave bottom of the container the blades of the second set being shaped to fulfil the dual function of mixing ingredients placed in the container and also of chopping and pulverizing pieces of fruit placed into the container and held against rotation therein by means of the said ribs.

In order that the nature of the invention may be better understood a preferred form thereof is hereinafter described by way of example with reference to the accompanying drawings in which:-

Fig. 1 is a vertical median section through a milk shake maker according to the invention; and

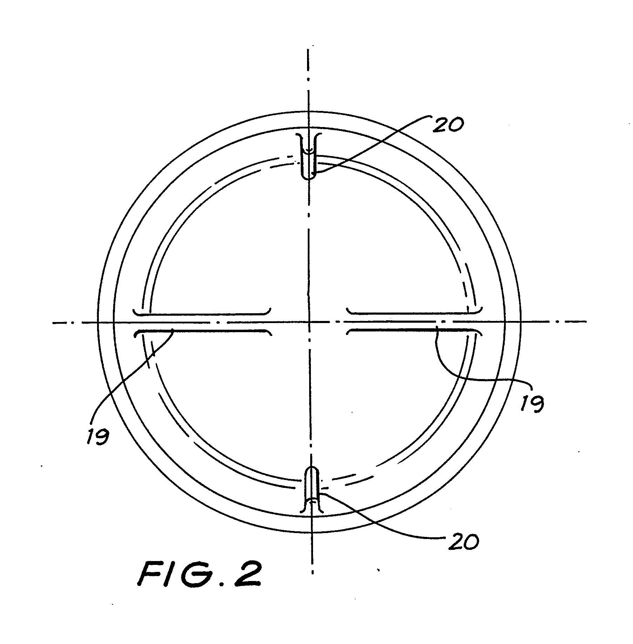

Fig. 2 is a plan view of the container.

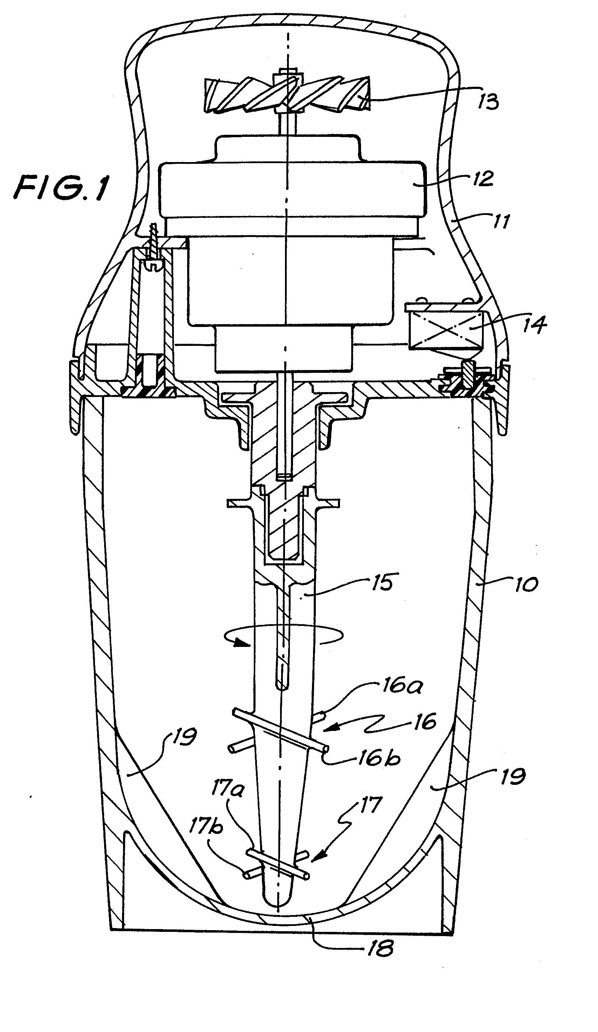

The milk shake maker illustrated in the drawings consists of a container 10 moulded in plastic material and a cover 11 which is separable from the container and is moulded from similar material. The lid 11 contains an electric motor 12, a cooling fan 13 and an electric switch 14 which is operated by depressing the lid 11 in relation to the container 10. This actuates the motor 12 and causes it to drive the shaft 15 at a speed of the order of 16,000 rpm. On the shaft 15 are two sets of mixing blades 16 and 17 of which each consists of two planar parts 16a and 16b and 17a and 17b. As will be seen from Fig. 1 the two parts are arranged on either side of the shaft at an angle to each other of the order of 50 degrees and at an angle to the axis of the shaft of the order of 65 degrees.

The container 10 is provided with a generally concave bottom 18 and has extending radially inwardly from part of the side of the container and the bottom, two ribs 19 spaced apart at 180$^{o}$. These ribs extend into the rounded button of the container and have edges making an angle of the order of 30 degrees with the axis of the shaft. Arranged between these symmetrically and also spaced at 180$^{o}$ are ribs 20 such as are conventionally found in milk shake makers, that extend through a major part of the height of the container 10.

In use a mixture of milk, ice cream and pieces of fruit are placed in the container 10. The lid 11 is then placed on the container and the lid depressed to cause rotation of the blades 16 and 17. The upper set of blades corresponding to those conventionally provided in milk shake makers act to agitate liquid in the container. The second lower set of blades acts to promote agitation and also to cut pieces of fruit collecting in the concave bottom of the container into smaller pieces, the ribs 19 in particular acting to prevent the pieces of fruit from rotating in the container. The direction of rotation of the shaft is such that, as it rotates, material is driven downwardly by the inclined blades 16 and 17 into the bottom of the container. The concave shape of the bottom 18 of the container 10 causes solids to tend to gravitate towards the bottom of the container and remain under the influence of the lower blade 17. Once the fruit has been chopped and pulverized to a sufficient extent the mixer acts in the ordinary way to produce a more or less homogenous drinkable liquid from the ingredients inserted into the container.

While in the embodiment of the invention illustrated the driving motor is contained in a cover for the container this is not an essential feature of the invention in that a container and mixing blades as described may be used in the more usual configuration of a milk shake maker in which the motor and shaft carrying the blades are held on a stand and the container is offered up to them, the motor being controlled by means of a conventional switch.

## CLAIMS

1.   A milk shake maker comprising an elongated upright
container (10) open at the upper end, the lower end of the
container being closed by an internally concave bottom
(18), there being formed in the sides of the container
near the bottom and extending into the concavity a
plurality of circumferentially spaced, radially inwardly
extending ribs (19), an electrically driven shaft (15)
extending into the container to the bottom thereof, the
shaft having on it two sets of blades (16,17), a first set
(16) on a portion of the shaft (15) above the bottom (18)
and a second set (17) near its lower end and within the
concave bottom (18) of the container the blades of the
second set (17) being shaped to fulfil the dual function
of mixing ingredients placed in the container and also of
chopping and pulverizing pieces of fruit placed into the
container and held against rotation therein by means of
the said ribs(19).

2.   A milk shake maker as claimed in claim 1, wherein the
blades (17) of the second set at least consists of a pair
of inclined planar blades (17a,17b) on opposite sides of
the shaft (15) arranged to drive material downwardly into
the bottom of the container.

3.   A milk shake maker as claimed in claim 2, wherein the
blades of the first set (16) are constructed and arranged
in a manner similar to the first.

4.   A milk shake maker as claimed in claim 1, wherein
there are two of said ribs (19) arranged 180 degrees apart.

5.   A milk shaker maker substantially as described with
reference to and as illustrated in the accompanying
drawings.

FIG.1

FIG.2

European Patent
Office

# EUROPEAN SEARCH REPORT

Application Number

EP 87 30 3871

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | US-A-2 225 250 (RODWICK)<br>* En entier * | 1-4 | A 47 J 43/044 |
| Y | US-A-3 166 303 (CHAPMAN)<br>* Column 4, lines 13-19; figures 1-3 * | 1-4 | |
| A | US-A-1 765 095 (POPLAWSKI)<br>* Figure 13 * | 1-3 | |
| A | US-A-2 064 861 (STROUD)<br>* Column 2, lines 13-19; figures 1,2 * | 1,4 | |
| A | US-A-2 736 537 (NELSSON)<br>* Figure 1 * | 1 | |
| A | US-A-4 480 926 (LATTERY, Jr. et al.)<br>* Figure 2 * | 1 | |

TECHNICAL FIELDS
SEARCHED (Int. Cl.4)

A 47 J
B 01 F

The present search report has been drawn up for all claims

| Place of search | Date of completion of the search | Examiner |
|---|---|---|
| THE HAGUE | 17-11-1987 | GAIC P.M.Z. |

EPO FORM 1503 03.82 (P0401)